# EUROPEAN PATENT APPLICATION

(11) **EP 3 506 619 A1**
(43) Date of publication of application: **03.07.2019**
(21) Application number: 17210619.7
(22) Date of filing: 27.12.2017
(51) Int. Cl.: H04N 5/232, H04N 5/225

(54) **RECEIVING AND DISPLAYING SENSOR DATA ON A SUBSTANTIALLY SPHERICAL SURFACE OF A DISPLAY DEVICE**

(71) Applicant: Nokia Technologies Oy, 02610 Espoo (FI)
(72) Inventor: OIKKONEN, Markku, 00640 Helsinki (FI); AARNIO, Ari, 02230 Espoo (FI); SUN, Yajie, Palo Alto, CA California 94306 (US)
(74) Representative: Nokia EPO representatives

(57) **Abstract**

Aspects described herein include apparatus, methods, and computer program for receiving, from an image capture device comprising a plurality of sensors, data associated with the plurality of sensors on the image capture device. An apparatus or another apparatus may comprise any means, such as one or more hardware processors and/or circuitry, for determining, based on the received data, a plurality of locations on one or more displays on a substantially spherical surface of the apparatus corresponding to locations on the image capture device. The apparatus may comprise means for displaying, on the one or more displays of the apparatus, a plurality of elements representing the data associated with the plurality of sensors on the image capture device. An element of the plurality of elements may be displayed at one of the plurality of locations on the one or more displays of the apparatus.

## Description

### BACKGROUND

Content, such as images and videos, may be captured by various types of cameras, such as action cameras, digital single-lens reflex (DSLR) cameras, video cameras, 360-degree cameras, and the like. Existing systems for viewing the content may comprise planar (e.g., two-dimensional) screens, head-mounted display screens, or various other types of displays. However, existing displays might not efficiently or intuitively display some types of content, such as three-dimensional content. For example, three-dimensional content displayed on a two-dimensional screen may appear distorted or might be difficult for the viewer to understand. Content displayed on a head-mounted display screen might by cumbersome and may only allow for a limited field of view. For example, the viewer may have to turn his or her head or body to view other scenes.

### BRIEF SUMMARY

This summary is provided to introduce a selection of concepts in a simplified form that are further described below in the Detailed Description. This Summary is not intended to be used to limit the scope of the claims.

Aspects described herein include an apparatus comprising hardware or any means for performing receiving, from an image capture device comprising a plurality of sensors, data associated with the plurality of sensors on the image capture device. The apparatus or another apparatus may determine, based on the received data, a plurality of locations on one or more displays on a substantially spherical surface of the apparatus corresponding to locations on the image capture device. The apparatus may display, on the one or more displays of the apparatus, one or more elements (e.g., a plurality of elements) representing the data associated with the plurality of sensors on the image capture device. An element of the one or more elements may be displayed at one of the plurality of locations on the one or more displays of the apparatus.

Optionally, the plurality of sensors on the image capture device may comprise a plurality of cameras on the image capture device. The data may be indicative of locations of each of the plurality of cameras on the image capture device. Determining the plurality of locations on the one or more displays may comprise determining the plurality of locations corresponding to the locations of each of the plurality of cameras on the image capture device. Displaying the one or more elements may comprise displaying a plurality of graphical user interface elements representing the plurality of cameras on the image capture device. Optionally, one or more graphical user interface elements, of the plurality of graphical user interface elements, may indicate one or more of an aperture size, a shutter speed, an ISO sensitivity, or white balance of a camera, of the plurality of cameras, represented by the graphical user interface element.

Optionally, the plurality of sensors on the image capture device may comprise a plurality of cameras on the image capture device. The data may comprise a plurality of images captured by the plurality of cameras on the image capture device. Displaying the one or more elements may comprise displaying the plurality of images captured by the plurality of cameras on the image capture device. Optionally, the means may further be configured to perform stitching together two or more of the plurality of images to form a substantially continuous image. The displaying the plurality of images may comprise displaying the substantially continuous image. Optionally, the substantially continuous image may comprise one or more stitching seams that indicate one or more boundaries between the two or more of the plurality of images. The means may further be configured to perform moving at least one of the one or more stitching seams prior to displaying the substantially continuous image.

Optionally, the means may further be configured to perform removing, from the one or more displays of the apparatus, display of a plurality of graphical user interface elements representing the plurality of cameras. Displaying the plurality of images captured by the plurality of cameras may be performed after the removing display of the plurality of graphical user interface elements representing the plurality of cameras.

Optionally, the plurality of sensors on the image capture device may comprise a plurality of microphones on the image capture device. The data may be indicative of locations of each of the plurality of microphones on the image capture device. Determining the plurality of locations on the one or more displays may comprise determining the plurality of locations corresponding to the locations of each of the plurality of microphones on the image capture device. Displaying the one or more elements may comprise displaying a plurality of graphical user interface elements representing the plurality of microphones on the image capture device. Optionally, the data may be indicative of a direction of an audio signal received by one or more microphones on the image capture device. The means may be further configured to perform determining, based on the received data, a location on the one or more displays of the apparatus and corresponding to the direction of the audio signal received by the one or more microphones on the image capture device. The means may be further configured to perform displaying, on the one or more displays of the apparatus and at the location corresponding to the direction of the audio signal, a graphical user interface element representing the audio signal.

Optionally, the one or more displays of the apparatus may comprise one or more touchscreen displays. The means may further be configured to perform receiving, via the one or more touchscreen displays, user input of a command for the image capture device. The means may further be configured to perform transmitting, by the apparatus and to the image capture device, the command for the image capture device. Optionally, the command may comprise a command to rotate the image capture device.

Optionally, the means may further be configured to perform displaying a graphical user interface element representing a reference direction for the image capture device.

Optionally, the means may comprise at least one processor and at least one memory including computer program code, the at least one memory and computer program code configured to, with the at least one processor, cause the performance of the apparatus.

Aspects described herein include a method comprising receiving, by a display device and from an image capture device comprising a plurality of sensors, data associated with the plurality of sensors on the image capture device. The method may comprise determining, based on the received data, a plurality of locations on one or more displays on a substantially spherical surface of the display device corresponding to locations on the image capture device. The method may comprise displaying, on the one or more displays of the display device, one or more elements representing the data associated with the plurality of sensors on the image capture device. Each element of the one or more elements may be displayed at one of the plurality of locations on the one or more displays of the display device.

Optionally, the plurality of sensors on the image capture device may comprise a plurality of cameras on the image capture device. The data may be indicative of locations of each of the plurality of cameras on the image capture device. Determining the plurality of locations on the one or more displays may comprise determining the plurality of locations corresponding to the locations of each of the plurality of cameras on the image capture device. Displaying the one or more elements may comprise displaying a plurality of graphical user interface elements representing the plurality of cameras on the image capture device.

Aspects described herein include a computer-readable medium storing computer-readable instructions that, when executed by a computing device, may cause the computing device to receive, from an image capture device comprising a plurality of sensors, data associated with the plurality of sensors on the image capture device. The instructions, when executed by the computing device, may cause the computing device to determine, based on the received data, a plurality of locations on one or more displays on a substantially spherical surface of the computing device corresponding to locations on the image capture device. The instructions, when executed by the computing device, may cause the computing device to display, on the one or more displays of the computing device, one or more elements representing the data associated with the plurality of sensors on the image capture device. Each element of the one or more elements may be displayed at one of the plurality of locations on the one or more displays of the computing device.

Any one or more of the above-described features may be used with any other feature or aspect in isolation or any combination. Features from one embodiment or aspect may be interchanged or used together with one or more features of any other described embodiment or aspect.

### BRIEF DESCRIPTION OF THE DRAWINGS

Certain embodiments are illustrated by way of example and not limited in the accompanying figures in which like reference numerals indicate similar elements and in which:
FIG. 1 illustrates an example of an image capture device and a display device according to one or more embodiments described herein.
FIGS. 2a-c illustrate examples of display devices according to one or more embodiments described herein.
FIG. 3 illustrates an example of a display device according to one or more embodiments described herein.
FIG. 4 illustrates an example of an image capture device capturing images and a display device displaying images captured by an image capture device according to one or more embodiments described herein.
FIG. 5 illustrates another example of a display device displaying images captured by an image capture device according to one or more embodiments described herein.
FIG. 6 illustrates yet another example of a display device displaying images captured by an image capture device according to one or more embodiments described herein.
FIG. 7 illustrates another example of a display device according to one or more embodiments described herein.
FIG. 8 illustrates an example method for receiving and/or displaying data on a display device according to one or more embodiments described herein.
FIG. 9 illustrates an example method for receiving command(s) and/or performing action(s) based on received command(s) according to one or more embodiments described herein.
FIG. 10 is a block diagram of an example computing device according to one or more embodiments described herein.
FIG. 11 illustrates examples of various setups of an image capture device, a display device, and/or a remote control according to one or more embodiments described herein.

### DETAILED DESCRIPTION

In the following description of various illustrative embodiments, reference is made to the accompanying drawings, which form a part hereof, and in which are shown by way of illustration various embodiments in which the invention may be practiced. It is to be understood that other embodiments may be utilized and structural and functional modifications may be made without departing from the scope of the present invention.

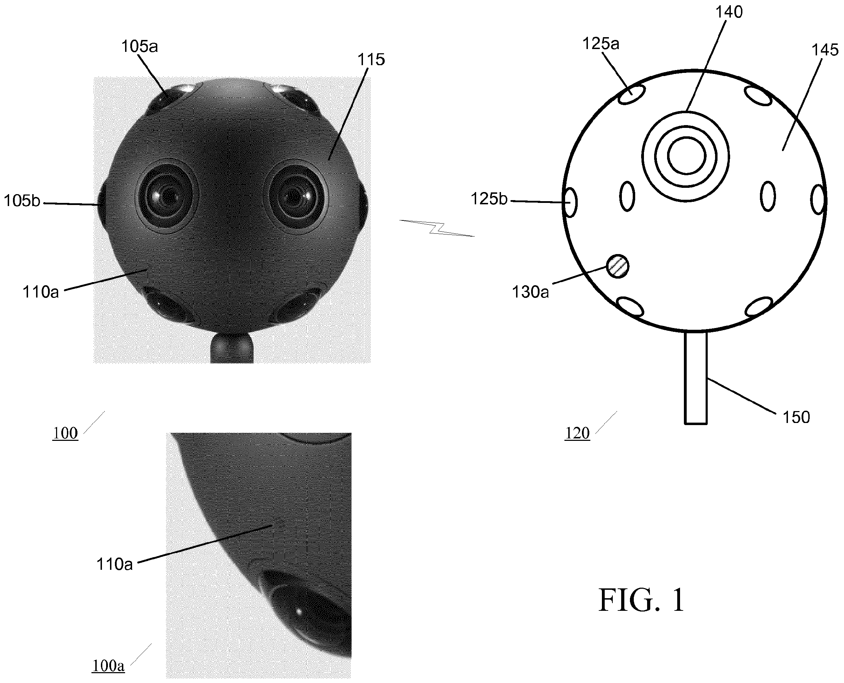

FIG. 1 illustrates an example of an image capture device 100 and a display device 120 according to one or more embodiments described herein. In some aspects, the image capture device 100 may capture one or more images and/or videos, such as at a shooting set. The display device 120 may be at or near the shooting set or may be at a location remote from the shooting set. As will be described in further detail below, the display device 120 may display one or more images and/or videos captured by the image capture device 100 and/or may display one or more display elements representing sensor data associated with sensors on the image capture device 100. Sensor data may be any data relating to any one or more sensors and/or data captured by the sensors. Sensor data may include various parameters of the image capture device 100, including various parameters of camera or lens, such as aperture size, shutter speed, special effects, white balance, etc. The display device 120 may receive the captured image(s) and/or sensor data from the image capture device 100 via a wireless connection and/or wired connection, as will be described in further detail below. For reading simplicity, the example image capture devices, cameras, and lens are described to capture one or more images, without mentioning videos each time. It is understood that, as described herein, example image capture devices (e.g., image capture device 100), cameras, and lenses can capture images and/or videos. Similarly, example display devices (e.g., display device 120) can display images and/or video without mentioning videos each time.

The image capture device 100 may comprise a plurality of sensors. For example, the image capture device 100 may comprise one or more cameras (e.g., camera 105a, camera 105b, etc.) and/or their associated lenses. The camera(s) may be used to capture one or more images and/or videos. The image capture device 100 may include one camera, two cameras, five cameras, eight cameras, or any number of cameras. In the eight-camera example, four cameras may be on a horizontal side ring, two cameras may be on the top, and two cameras may be on the bottom, as illustrated in FIG. 1. The cameras may be positioned at one or more locations on the image capture device 100, and each camera may face a respective direction. The image capture device 100, which may be in any size and shape, may capture an image or video that can be displayed on display device 120 or the like. In some implementations, the image capture device 100 may be substantially spherical or spherical in shape. For example, each camera of the image capture device 100 may be positioned on a substantially spherical surface 115 of the image capture device 100, so that a plurality of the cameras may be used to capture a panoramic and/or 360 degree image. The image capture device 100 may be multidirectional or omnidirectional, such as when the cameras of the image capture device 100 are positioned to capture a plurality of directions (e.g., different directions) to form, for example, a 360 degree panoramic image.

The image capture device 100 may comprise other types of sensors. For example, the image capture device 100 may comprise one or more microphones (e.g., microphone 110a), and the microphones may be used to capture and/or record audio signals. A magnified portion 100a of the image capture device 100 indicates a location of the microphone 110a. The image capture device 100 may include other sensors, such as one or more compasses, Global Positioning System (GPS) sensors, barometers, gyroscopes, accelerometers, ambient light sensors, etc.

The display device 120 may comprise one or more displays (e.g., a single display or a plurality of displays) for displaying information. The one or more displays may form a display surface 145, which may be curved, hemispherical, substantially spherical, etc. In some aspects, the one or more displays may comprise or form a curved display. For example, the one or more displays may comprise or form a substantially hemispherical display, a substantially spherical display (e.g., a spherical display), a 360 degree, omnidirectional, uniform spherical display, and the like. In some aspects, the one or more displays may form a polyhedron-type display. The polyhedron-type display may comprise an irregular or regular form polyhedron with n number of faces. In some aspects, the one or more displays may form a cylindrical surface or other three-dimensional (3D) surfaces.

The display surface 145 of the display device 120 may be used to present any information, including textual information and visual information, such as graphical user interface (GUI) elements and/or images. The display device 120 may display information related to cameras and/or camera lenses of the image capture device 100. Each camera and/or camera lens of the image capture device 100 may have an optical axis corresponding to the direction that the camera and/or camera lens is facing. For example, the display device 120 may display a GUI element 125a that represents the location and/or direction of the camera 105a on the image capture device 100. The display device 120 may similarly display, for example, a GUI element 125b that represents the location and/or direction of the camera 105b on the image capture device 100. The display device 120 may display one or more other GUI elements that represent the location(s) and/or direction(s) of a respective camera on the image capture device 100. In the alternative or in addition to a GUI element, textual elements (not shown) may be displayed.

The display device 120 may display information related to one or more other sensors, such as microphones of the image capture device 100. For example, the display device 120 may display a GUI element 130a that represents the location of the microphone 110a on the image capture device 100. The display device 120 may similarly display other GUI elements that represent the locations of other microphones or other sensors of the image capture device 100.

In some aspects, the display device 120 may display information related to audio signals captured by one or more microphones of the image capture device 100. For example, the GUI element 140 may represent the direction and/or magnitude of an audio signal captured by microphones of the image capture device 100. The direction of the audio signal may be indicated by the location of the GUI element 140 on the display surface 145. For example, two microphones may be at two locations on the image capture device 100. If both microphones sense the same volume, it can be deduced that the sound source may be at the same distance between the microphones. The net effect may be that the sound appears to hit the image capture device 100 in-between the two microphones. The display device 120 may display, in addition to (or instead of) the locations of the microphones, the location on the display surface 145 that faces the sound source. In this example, the display device 120 may display a GUI element 140 that may be determined from sensor (e.g., microphone) data, and the location on the display device 120 may be calculated from the sensor data. The magnitude of the audio signal may be represented by the size of the GUI element 140. For example, a larger GUI element 140 (e.g., larger circular waves, more circular waves, etc.) may indicate an audio signal with a greater magnitude. On the other hand, a smaller GUI element (e.g., smaller circular waves, fewer circular waves, etc.) may indicate an audio signal with a smaller magnitude.

In some aspects, the display device 120 may display compass information, such as the directions of north, south, east, west, etc. These directions may correspond to the directions at the location of the image capture device 100. The compass information may be displayed in a compass layer, such as when selected by the user. The display device 120 may display other geographic directions, such as the direction to a city, a landmark, etc. from the image capture device 100. The locations and/or directions of stars, the sun, the moon, etc. (e.g., as seen from the location of the image capture device 100) may be displayed. These locations may be determined by, for example, astronomic data.

In some aspects, a user of the image capture device 100 and/or the image display device 120 (e.g., a cameraman, etc.) might, at the shooting scene, want to set or register a certain reference direction that may be useful for later use (e.g., editing). The cameraman may, for example, before the actual shooting starts, point a camera of the image capture device 100 in a desired direction, and the image capture device 100 may detect and register that direction. The registered direction may be displayed on the display device 120 and may help the director or other user when dealing with the scene, actor position, orientations, etc.

The various GUI elements described above (and as will be described below) may be displayed simultaneously or separately on the display surface 145 of the display device 120. For example, one or more GUI elements representing the location(s) of microphones (e.g., GUI element 130a) may be displayed simultaneously with GUI elements representing the location(s) of cameras (e.g., GUI elements 125a and 125b). In other examples, GUI elements representing the locations of microphones (or other sensors) may be displayed separately from the GUI elements representing the locations of the cameras. The GUI elements representing the direction and/or magnitude of audio signals captured by one or more microphones of the image capture device 100 may be displayed simultaneously with or separately from the other GUI elements.

The display surface 145 of the display device 120 may be used to display images captured by the cameras of the image capture device 100. Each image may be displayed at a location corresponding to the location of the camera that captured the image. For example, an image captured by the camera 105b may be centered on the display surface 145 at the location of the GUI element 125b. Other images may similarly be displayed at corresponding locations. Two or more of the images may be stitched together to form, for example, a continuous image or a substantially continuous image. An image formed with the content of two or more images, e.g., stitched the two or more images together, is continuous when the formed image is visually continuous. That is, a viewer viewing the formed image, without any optical aid, would not easily detect missing content (e.g., missing pixels), if any, near the transition (e.g., the stitching seam) of the two or more images. A "continuous image" may include all the content of the two or more images or may be missing some of the content from any one of the two or more images, but the missing content is not readily detectable with the unaided eye. A "substantially continuous image" is a continuous image that may be, but does not have to be, missing some of the content from any one of the two or more images, and the missing content may be detectable with the unaided eye. If a substantially continuous image includes any missing content, the missing content may be detectable on the display surface 145 or at or near a location of a non-display element (not shown), such as a physical button (e.g., for receiving user input). The substantially continuous image may be displayed on the display surface 145 of the display device 120. As will be described in further detail below, stitching seams of the images may be displayed and/or adjusted. Images captured by the cameras may be displayed simultaneously with or separately from the GUI and/or textual elements representing the sensor data of the image capture device 100 (or the data captured by the sensors). For example, one or more GUI elements may be displayed in conjunction with displaying the images captured by the cameras (e.g., overlaid one or more GUI elements on the images captured by the cameras, or vice versa).

In some aspects, the display device 120 may display image content captured by the cameras of the image capture device 100, such as in a 180 degree view, 360 degree view, or a substantially 360 degree view. The display device 120 may act as a remote viewfinder for the image capture device 100. A user of the display device 120 may look at the display device 120 to identify or view the image content through one or more lenses of the image capture device 100, e.g., the image content that was captured, is being captured, or can be captured by the cameras of the image capture device 100.

In some aspects, the display device 120 may act as a counter object to the image capture device 100. For example, the display device 120 may have the same or similar size, form, weight, etc. as the image capture device 100. Alternatively, the display device 120 may be larger than the image capture device 100, so that more detailed images may be displayed and viewed. The image capture device 100 may have a support, such as a handle, for moving or rotating the image capture device 100. The display device 120 may similarly have a support 150, such as a handle, for moving or rotating the display device 120. As will be described in further detail below, moving or rotating the display device 120 may cause the image capture device 100 to similarly move or rotate. The ability to rotate the image capture device 100 using the display device 120 may be beneficial, such as if the image capture device has a blind spot, and high quality image capture in the direction of the blind spot is desired.

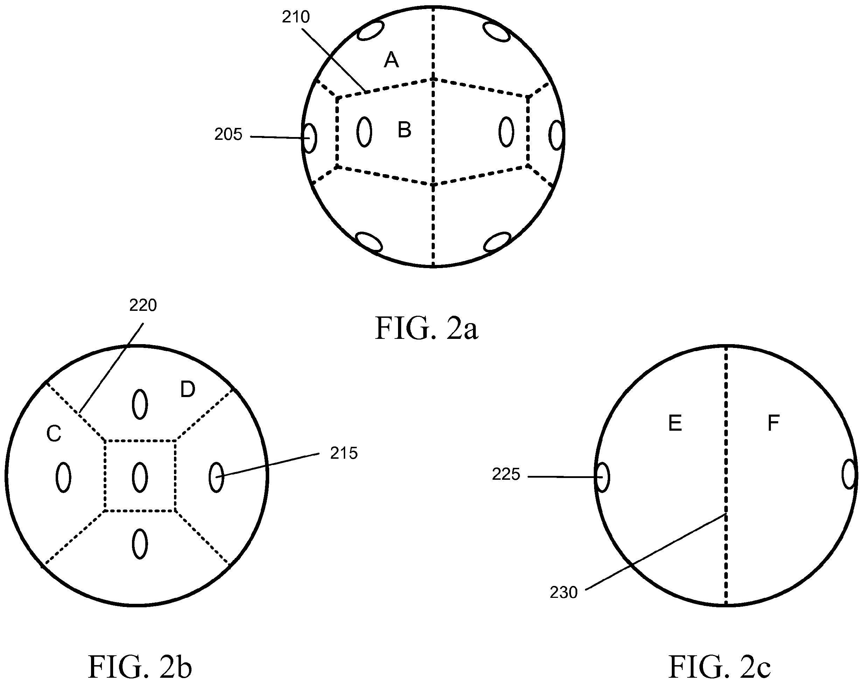

FIGS. 2a-c illustrate examples of display devices according to one or more embodiments described herein. A display device may represent an image capture device comprising a plurality of cameras, and each camera may capture a corresponding image. Two or more of the captured images may be stitched together to form a substantially continuous image. For example, the display device may stitch together images to form a panoramic image, a 360-degree image, etc.

FIG. 2a illustrates an example display device representing an image capture device having, for example, eight cameras, such as a camera 205. Each of the eight cameras may capture images and/or videos, and the images may be stitched together to form a substantially continuous image. Stitching lines or stitching seams, such as stitching seam 210, may be present between two images, such as image A and image B. Similarly, additional one or more stitching seams may be present to show the stitching boundary of two images captured by two different cameras. Optionally, the display device may display, on its display surface, one or more of the stitching seams. The user may provide input to the display device (e.g., via a touchscreen interface or other input methods) to move the stitching seams, such that the stitched image is made up of more of one image captured by one camera and less of another image captured by another camera. For example, the user may move the stitching seam 210 downward or in any direction, and the substantially continuous image may comprise more of image A and less of image B after the stitching process. Any stitching seams may be shown with any line format, including straight lines, curved lines, arc lines, wiggle lines, zig-zag lines, etc., and different stitching seams may be shown with different line formats.

FIG. 2b illustrates an example display device representing an image capture device having five cameras, such as a camera 215. Each of the five cameras may capture images, and the images may be stitched together to form a substantially continuous image. Stitching seams, such as stitching seam 220, may be present between two images, such as image C and image D. Similar stitching seams may be present at to show the stitching boundary of two images captured by two different cameras.

FIG. 2c illustrates an example display device representing an image capture device having two cameras, such as a camera 225. Each of the two cameras may capture images, and the images may be stitched together to form a substantially continuous image. A stitching seam 230 may be present between image E and image F.

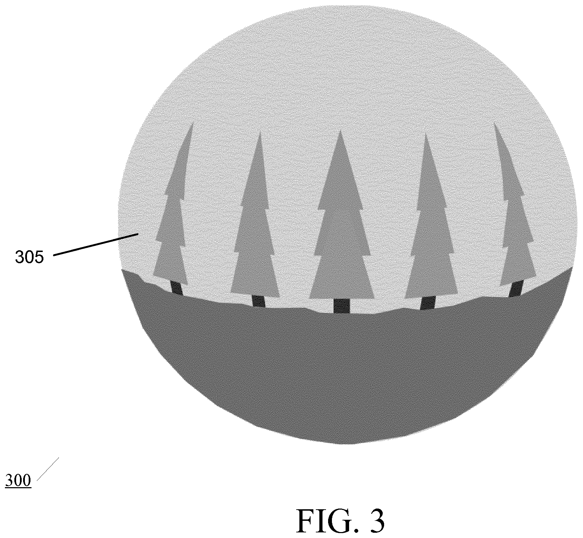

FIG. 3 illustrates an example of a display device 300 according to one or more embodiments described herein. As previously described, the display device 300 may display one or more images 305 captured by cameras of the image capture device. The content being displayed (e.g., images 305) may be live content (as the content are being captured) or stored content (the content have been written to a storage). The display device 300 may be advantageously used to consume and view substantially spherical images and/or videos, such as 360-degree images and/or videos. The display device 300 may be used as a user-friendly and universal content consumption device. Optionally, the display device 300 may receive images and/or videos from various third-party, 360-degree content sources and may display the received images and/or videos. The 360-degree content may be live content and/or may have been captured and/or created earlier and may have been stored at a content storage location. Some of the content may be partly or completely computer generated. A viewer may desire to view images and/or videos on the display device, which may be live content and/or stored content. While viewing the content, the viewer may switch modes to view, for example, only sensor data (e.g., GUI and/or textual element representing lens location, aperture, etc. specific to a camera or image capture device). The viewer may also switch modes to view both the sensor data in conjunction with viewing the content (e.g., at the same time). The sensor data may be overlaid on the content (e.g., an image and/or a video), or vice versa.

In some aspects, the display device 300 may be physically fixed in place, and images may be shown as moving on or underneath the surface of the display device 300 when a user, for example, swipes the surface by hand. Alternatively, images may be at fixed locations on the display device 300, and a user may physically rotate the display device 300, which may be a sphere. The display device 300 may be on a surface or plate in a frame structure, which may enable the sphere to rotate freely or by hand within the frame structure. For example, magnets may be used to levitate the display device 300 within the frame structure. As previously explained, the display device 300 may include a support, such as a handle, and the user may rotate the display device 300 using the support.

In some aspects, moving the display device translationally may cause the image capture device to also move translationally. In some examples, the distance that the display device is moved may be shorter than the distance the image capture device moves. For example, moving the display sphere 5 centimeters in the x-axis direction may move the image capture device 50 centimeters in the x-axis direction. The user may define the magnification/compression factor. In some aspects, the display device may be a mouse-like device that may be placed on a table or other flat surface. The display device may have a rotatable sphere embedded, and the display device may be moved around on the table, such as in the x and y directions. In the z direction, the display device may have springs, pistons, or other mechanisms to allow the user to move the display device in the z direction (e.g., vertically). Correspondingly, the image capture device may have similar mechanisms to move in x, y, and z directions based on movement of the display device. The display device and/or the image capture device may utilize one or more coordinate systems, such as an external coordinate system, to measure movement. The coordinate system(s) may be used to measure where the center of the display device is moving in the x, y, and/or z directions.

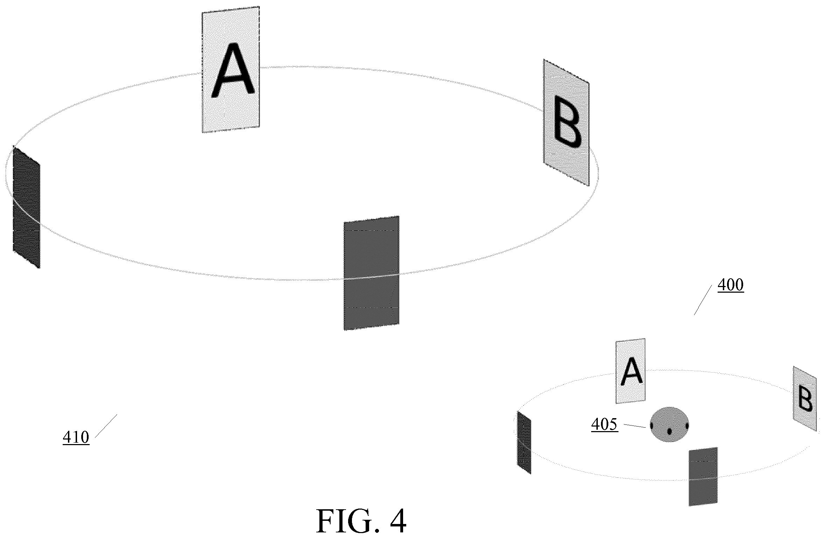

FIG. 4 illustrates an example 400 of an image capture device capturing images and an example 410 of a display device displaying images captured by an image capture device according to one or more embodiments described herein. The example 410 may be from an inside perspective of a substantially spherical, non-transparent display. The image capture device 405 (e.g., a 360-degree camera) may be at the center, as illustrated in example 400. In an example 3D video (or panaroma video), four vertical panels may be around the camera, each represented by a letter (e.g., A, B, C, D). Inside of the substantially spherical display, a viewer may see the letters (e.g., all of the letters) on an immersive 360-degree display of content from the camera all around the inner surface of that substantially spherical display. The viewer may be virtually at the same location in reference to the visual environment as the image capture device has been. A viewer outside of the substantially spherical display may have a different view. When displaying the 3D video with a substantially spherical display (and projecting from the perspective of the inside center of the substantially spherical display), a viewer viewing from the outside of the substantially spherical display might not see panels C and D if the display(s) of the display device are not transparent.

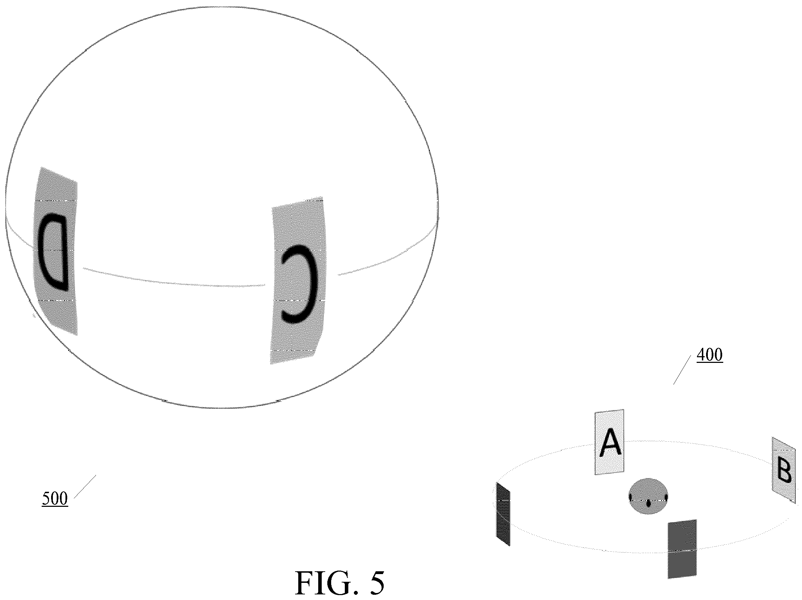

FIG. 5 illustrates another example 500 of a display device displaying images captured by an image capture device according to one or more embodiments described herein. One or more images captured by the image capture device may be displayed to the viewer through a transparent, substantially spherical display. For example, the substantially spherical display may have a transparent, semitransparent, and/or translucent screen or skin. One or more projector(s) may be inside the spherical display and may project the spherical image on an interior surface of the display device, and corresponding mirror images may be viewable from an outside surface of the display device. For example, a viewer viewing from outside of the display may be able to see panels C and D, but as mirror images of panels C and D when viewed from the inside. Panels A and B might not be seen in this example because panels A and B are on the back side of the substantially spherical display. In some aspects, the outside surface of the display device may be covered with light emitting display elements, and pixels may display the desired mirror images.

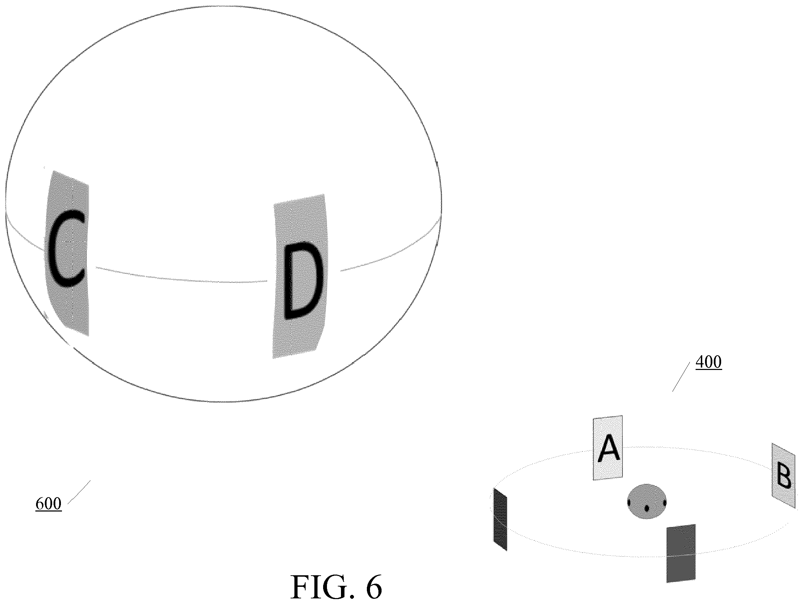

FIG. 6 illustrates yet another example 600 of a display device displaying images captured by an image capture device according to one or more embodiments described herein. As previously explained, images captured by the image capture device may be displayed to the viewer through a semitransparent material (e.g., via projectors) and/or using light emitting display elements on the outside of the display device. The images may be displayed from an inside perspective of the display device, as a flipped image or inside-out image. To illustrate this view, assume that the display device is a balloon, and that images are displayed on the interior of the balloon (e.g., as in example 400). Deflate the balloon, flip the balloon inside out, and blow up the balloon into a substantially spherical ball. The content displayed from the inside perspective of the balloon may now be shown wrapped around the outside of balloon, as illustrated in example 600. The displayed image might no longer be a mirror-image, such as the image displayed in FIG. 5. Accordingly, the mirror image effect may be removed.

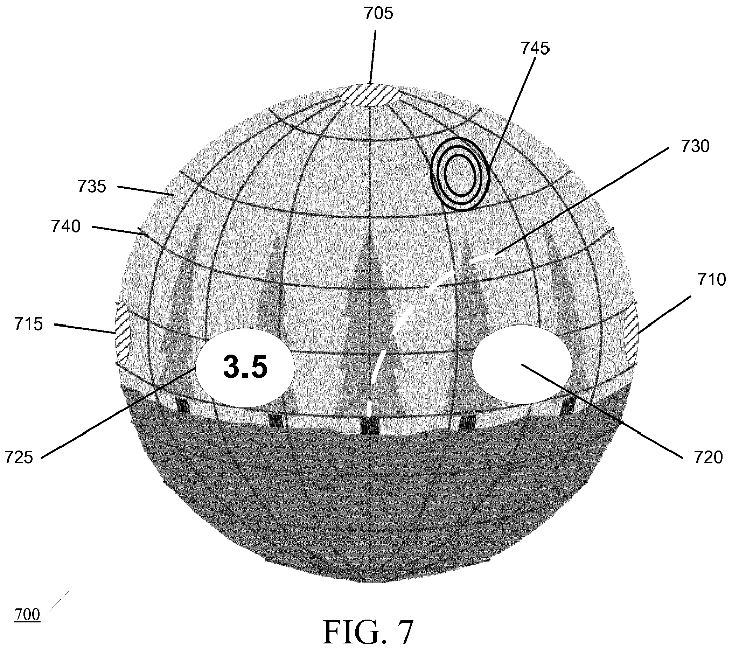

FIG. 7 illustrates another example of a display device 700 according to one or more embodiments described herein. As previously described, the display device 700 may display one or more images captured by an image capture device (e.g., image 735), one or more GUI elements (e.g., camera location, microphone location, audio signal direction and/or magnitude, stitching seams, etc.), or a combination thereof. For example, GUI elements may be superimposed on one or more images captured by the image capture device. The display device 700 may switch between various display modes. For example, in one mode, the display device 700 may display one or more images captured by the image capture device. In another mode, the display device 700 may display one or more GUI elements (e.g., camera or microphone locations). In other modes, the display device may display a combination of one or more images and one or more GUI elements. In yet another mode (e.g., an idle mode), the display device may display an image of the surface of the image capture device, including, for example, the cameras and/or lenses on the image capture device. Accordingly, the display device may look like the image capture device, although a closer look might reveal that the display does not have, for example, lens bumps on its surface. The display device 700 may switch between each of these modes, in any order.

The display device 700 may display GUI elements representing locations of corresponding cameras on the image capture device. For example, the display device 700 may display a GUI element 705, a GUI element 710, a GUI element 715, a GUI element 720, and a GUI element 725. A GUI element may indicate the location of a corresponding camera and/or lens on the image capture device. The GUI elements may indicate the direction that the cameras are pointing. As previously explained, the GUI elements may be shaped as circles, ovals, dots, etc. For example, a GUI element may be sized similarly to the size of the corresponding camera/lens and/or shaped similarly to the shape of the corresponding camera/lens.

Optionally, the user may select a GUI element, such as by touching the GUI element on the display of the display device. For example, the user may select GUI element 725. In some aspects, selecting a GUI element may cause the display device 700 to close the views of the other, non-selected cameras and show only the view of the chosen camera. In some aspects, selecting the GUI element may cause the display device 700 to display additional information for the selected camera, such as aperture size, shutter speed, etc.

The display device may display, via one or more GUI elements (e.g., GUI element 725 or other icons, bars, etc.), various parameters of the camera or lens, such as aperture size, shutter speed, special effects, white balance, etc. For example, GUI element 725 indicates an aperture size of 3.5 for the corresponding lens on the image capture device. GUI element 725 may additionally or alternatively display the shutter speed, white balance, ISO, etc. for the camera/lens.

The user may input one or more commands via the display device to control the cameras and/or lenses of the image capture device. For example, the display device 700 may include touch UI controls with which the user can adjust the settings of the corresponding camera or lens (e.g., aperture size, shutter speed, white balance, etc.). The user may provide a touch gesture on a corresponding camera's GUI element (or section on the display) to adjust the camera's settings. The user may similarly provide commands to control one or more microphones of the image capture device, such as adjusting sensitivity levels, turning a microphone on, turning a microphone off, etc.

The display device 700 may optionally display various other GUI elements. For example, the display device 700 may display one or more GUI elements, such as a GUI element 745, representing the direction and/or strength of audio signals captured by microphones of the image capture device. The display device 700 may show, for example, vibrating circle waves indicating the audio signal coming towards the image capture device from a certain direction. The display device 700 may display one or more GUI elements, such as GUI element 730, representing the location of stitching seams between captured images. As previously described, the user may move the stitching seams on the surface, such as by pressing down on the stitching seam and dragging the stitching seam a particular direction. The display device 700 may display one or more grid lines, such as grid line 740, on the substantially spherical display. The grid lines may indicate, for example, the curvature of the display device.

Optionally, the image capture device may have certain directions (e.g., axes) as reference directions. For example, the image capture device (e.g., having a substantially spherical surface) may have a local coordinate system with orthogonal x, y, and z axes, spherical coordinates, and/or other coordinate systems. The directions and/or coordinates may be user-defined. Some of the axes may be coincident with the directions and/or locations of some cameras or lenses, while other axes might not be coincident. The x, y, and z directions may be fixed on the image capture device, so that if the image capture device is rotated, the directions of the axes move accordingly. The physical image capture device may optionally have visual indications showing where the x, y, and z directions are located. On the display device 700, the corresponding x, y, and z direction points, arrows, or other graphics may be displayed.

Any of the method steps, operations, procedures or functions described herein may be implemented using one or more processors and/or one or more memory in combination with machine executable instructions that cause the processors and other components to perform the method steps, procedures or functions. For example, as further described below, display devices and image capture devices described herein may each include one or more processors and/or one or more memory in combination with executable instructions that cause each device/system to perform operations as described herein.

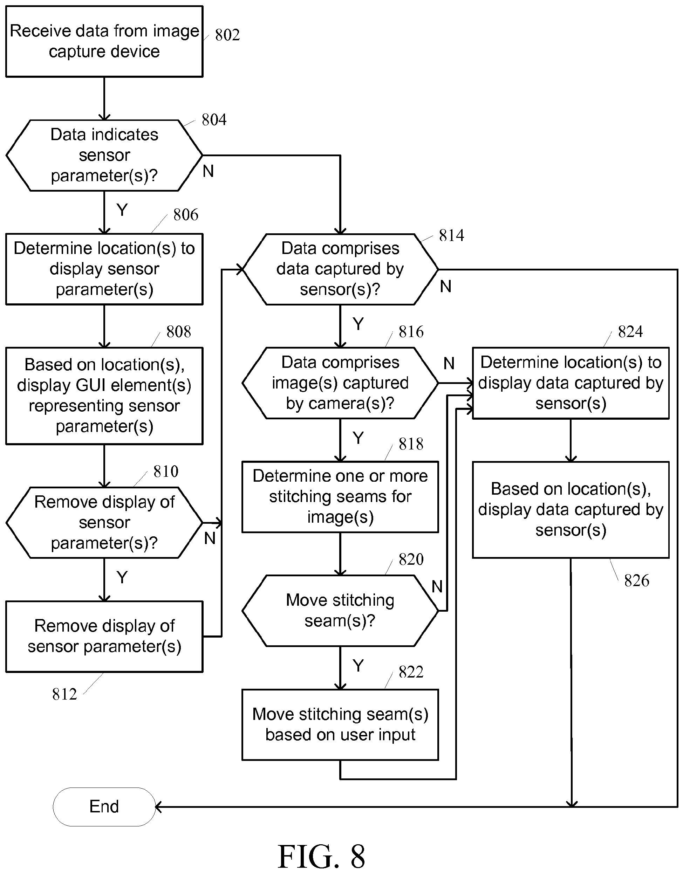

FIG. 8 illustrates an example method for receiving and/or displaying data on a display device according to one or more embodiments described herein. In step 802, the display device may receive data from the image capture device. Optionally, the data may indicate locations of a plurality of sensors (e.g., cameras, microphones, etc.) on a surface of the image capture device. For example, the data may indicate the locations of a plurality of cameras on the image capture device, the locations of a plurality of microphones on the image capture device, or a combination thereof. Optionally, the data may comprise data indicative of the direction and/or strength of audio signals received by microphones of the image capture device. Optionally, the data may comprise one or more images and/or videos captured by one or more cameras of the image capture device.

In step 804, the received data may include sensor parameters and/or other sensor data. In some implementations, the display device may determine whether the received data indicates parameter(s) of one or more sensors (e.g., cameras or microphones) of the image capture device. For example, parameters may be the location of cameras on the image capture device, camera and/or lens settings (e.g., aperture size, shutter speed, etc.), the location of microphones on the image capture device, the location of stitching seams between images, the location and/or strength of audio signals captured by the microphones, among other parameters described herein. If the data does not indicate sensor parameters (or there is no indication for the display device to determine the sensor parameters, step 804: N), the method may proceed to step 814, as will be described in further detail below. If the data indicates sensor parameters (step 804: Y), the method may proceed to step 806.

In step 806, the display device may determine one or more locations on a surface (e.g., a substantially spherical surface) of the display device on which to display sensor parameter(s) and/or other sensor data. In some implementations, the display device does not need to perform the determination in step 806 if the information is provided to the display device (e.g., by the image capture device or by another device). For example, another device may perform the determination. The location(s) on the surface of the display device may correspond to respective location(s) on the surface of the image capture device. For example, a local coordinate system on the image capture device, and/or a local coordinate system on the display sphere may be used. The coordinate systems may comprise, for example, x, y, and/or z axes defined for a device. A specific camera/lens, for example, on the image capture device may have a location that can be specified in the image capture device's local coordinate system. In the display device's coordinate system, the location of the camera/lens may be specified with the same local coordinates as in the image capture device. The display device may also determine, if need to, which sensor parameter(s) to display. As previously described, the display device may display any of the parameters described herein and illustrated in, for example, FIGS. 1, 2, and 7, in any combination.

With reference to FIG. 1, the location of one or more cameras 105a, 105b, etc. on the image capture device 100 may be displayed at corresponding location(s) on the display surface 145 of the display device 120 (e.g., location 125a corresponding to camera 105a, location 125b corresponding to camera 105b, etc.). Similarly, the location of one or more microphones (e.g., microphone 110a) may be displayed at corresponding location(s) on the display surface 145 of the display device 120 (e.g., location 130a corresponding to microphone 110a). Similarly, the location and/or strength of one or more audio signals captured by the microphones of the image capture device 100 may be displayed at corresponding location(s) on the surface 145 (e.g., location 140).

With reference to FIGS. 2a-2c, the location of one or more stitching seams (e.g., stitching seams 210, 220, 230, etc.) may be displayed at corresponding location(s) on the display surface of the display device. With reference to FIG. 7, camera and/or lens settings (e.g., aperture size, shutter speed, etc.) may be displayed at corresponding location(s) on the surface of the display device 700, such as location 725. For example, the aperture size 3.5 may be displayed at the location 725 corresponding to the location of the respective camera/lens. The camera and/or lens settings may alternatively be displayed above, below, to the right, to the left of location 725, or at any other location.

Returning to FIG. 8, in step 808, based on the location(s) described in step 806, the display device may display, on one or more displays of the display device, one or more GUI elements representing the sensor parameter(s). As previously explained, the one or more displays may form a display surface on the display device, and the display surface may be curved, hemispherical, substantially spherical, polyhedron-type, etc. The display may be a single display or may be a plurality of displays that are arranged to form a substantially continuous display surface. Accordingly, the user of the display device may view various locations, parameters, settings, etc. of one or more of the image capture device's sensors. As will be described in further detail below, the user may provide commands to or otherwise interact with the display device. For example, the user may remove one or more of displayed GUI elements, add one or more GUI elements to the display, change sensor settings (e.g., turn a microphone on or off, change the aperture size of a camera lens, move a stitching seam, etc.).

In step 810, the display device may determine whether to remove display of one or more GUI elements representing sensor parameters. For example, the user may provide a command to remove one or more of the GUI elements. Additionally or alternatively, the display device may switch between various modes. The display device may switch from a mode that displays one or more GUI elements representing sensor parameters to a mode that displays one or more images captured by the image capture device (or vice versa). For example, before starting the image capture device, the display device may display an image of the image capture device, including its cameras, microphones, and/or other sensors. When activating the image capture device, the GUI elements representing the sensors (and displayed on the display device) may start to blink. After a period of time, the image of the image capture device on the surface of the display device may fade away, and the display device may display content captured by the cameras of the image capture device. If the display device determines to remove display of one or more GUI elements (step 810: Y), in step 812, the display device may remove one or more displayed sensor parameter(s) from the display. The method may proceed to step 814.

In step 814, the display device may determine whether the data received from the image capture device comprises sensor data captured by one or more sensors of the image capture device. As previously explained, sensor data may comprise images (e.g., images or video) captured by the camera(s) of the image capture device, audio signals captured by the microphone(s) of the image capture device, orientation of the image capture device measured by gyroscopes, accelerometers, compasses, and/or other orientation sensor, or any other sensor data. If the data does not comprise sensor data (step 814: N), the process may end. Alternatively, the display device may determine the type of data received from the image capture device and attempt to display images and/or GUI elements representative of the received data. If, on the other hand, the data comprises sensor data (step 814: Y), the method may proceed to step 816.

In step 816, the display device may determine whether the received data comprises one or more images captured by the camera(s) of the image capture device. If the received data is not image data captured by cameras (step 816: N), such as if the data is data captured by other sensors of the image capture device (e.g., microphones), the method may proceed to step 824, as will be described in further detail below. If, on the other hand, the received data comprises one or more images captured by the camera(s) of the image capture device (step 816: Y), the method may proceed to step 818.

In step 818, the display device may determine one or more stitching seams (if any) for the images captured by the cameras of the image capture device. As previously explained, two or more images captured by different cameras may be stitched together, at stitching seam boundaries, to form a substantially continuous image (e.g., a panoramic image, a 360 degree image, etc.). In some examples, the image capture device or another device may determine the stitching seams and may transmit the stitching seams to the display device. In other examples, the display device may determine the stitching seams based on the images received from the image capture device, such as by using post-processing algorithms for the images and/or videos. Examples of stitching seams are illustrated in FIGS. 2a-c and other figures.

In step 820, the display device may determine whether to move or change one or more of the stitching seams, which may be based on any factor, including, for example, if an input from a device or a user is received to move or change a stitching seam. In step 822, one or more of the stitching seams may be moved or changed if the display device determined to move the seams (step 820: Y). For example, the display device may receive a user command (e.g., via a touchscreen interface) to move or change one or more stitching seams. Moving or changing a stitching seam may cause the resulting stitched image to be made up of more of one image and less of another image. Additionally or alternatively, the display device may automatically move or change one or more stitching seams, such as to improve the final stitched image. For example, if the seam between two images intersects an area of the images with high complexity (e.g., high color disuniformity, high texture disuniformity, high contrast, etc.), the display device may move the seam to intersect an area of the images with lower complexity (e.g., color uniformity, texture uniformity, low contrast, etc.). The method may proceed to step 824.

In step 824, the display device may determine one or more locations on a surface (e.g., a substantially spherical surface) of the display device to display the data associated with and/or captured by one or more sensors of the image capture device. In some implementations, the display device does not need to perform the determination in step 824 if the information is provided to the display device by the image capture device or another device, which may perform the determination. In step 826, the display device may display the data captured by the sensors, based on the determined locations. For example, the display device may display, on one or more displays of the display device, one or more of the images received from the image capture device. An image may be located (e.g., centered) at one of the locations on the display according to the location of the camera that captured the image. In some aspects, the display device may display a substantially continuous image comprising a plurality of images stitched together. Optionally, the display device may also display one or more stitching seams that indicate boundaries between individual images. As previously explained, the user may move the stitching seams if desired. Optionally, the display device may display, at corresponding location(s) on a surface of the display device, the location and/or strength of one or more audio signals captured by the microphones of the image capture device. Other sensor data may similarly be displayed on the display device.

The steps illustrated in FIG. 8 may be performed in any order. For example, the display device may first display the image(s) captured by the image capture device (e.g., steps 824 and 826, among other steps), and then display the GUI element(s) representing sensor parameters (e.g., steps 806 and 808, among other steps). In some examples, the display device may simultaneously display a combination of one or more images and one or more GUI elements together, such as in the example illustrated in FIG. 7.

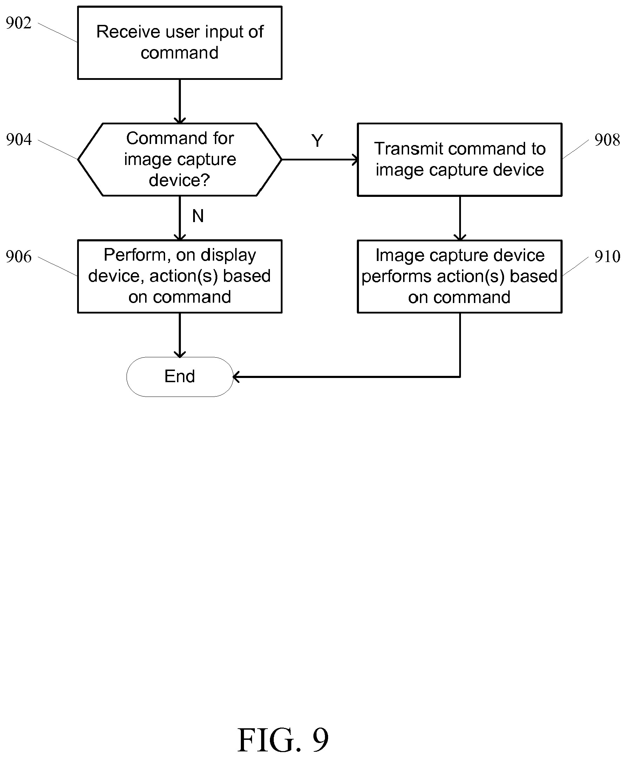

FIG. 9 illustrates an example method for receiving command(s) and/or performing action(s) based on received command(s) according to one or more embodiments described herein. In step 902, the display device may receive user input of one or more commands. For example, the display device may include a touch screen display and/or physical buttons for receiving user input. Sensors, such as touch sensors or light sensors, may also be located on the front surface of the display substrate of the display device. The display device may include one or more microphones for receiving voice commands and/or one or more cameras or other image sensors for capturing user gestures.

In step 904, the display device may determine whether the command is for controlling the image capture device. If the command is not for controlling the image capture device (step 904: N), the method may proceed to step 906. For example, the command may be a command for the display device to perform some action. In step 906, the display device may perform, on the display device, one or more actions based on the received command. Various examples of optional commands for the display device will now be described.

In some aspects, the user may manipulate the images displayed on the display device. For example, the user may swipe the surface of the display device (e.g., a substantially spherical surface) to move the image, such as to turn the image around and see the other side of the image. The user may also rotate and/or zoom the image displayed on the display device. For example, the user may rotate the image on the display by rotating the user's hand. The user may zoom in or out by pinching the displayed image.

In some aspects, the user may select which images to display on the display device. For example, the user may select an option to display some or all of the images from the image capture device (e.g., to form a substantially 360 degree image) or to display a subset of the received images. The user may select an image captured by a particular camera for closer view or operation. For example, a camera selection window for selecting a camera may be displayed to the user (e.g., as a pop-up window). The selectable numbers of different lenses or cameras or the like may be displayed along a circle or arc on the display. A cursor may be activated to scroll along or over the different lens or camera icons on the circle to move among different camera views. The user may select a lens/camera, and the image and/or video captured by the selected lens/camera may be displayed. The displayed window may provide stop, pause, play, fast forward, rewind, etc. options if the image is a video. In some aspects, a video clip of the respective camera within a predefined time slot captured around, before, or after a point in the video may be displayed. Optionally, when a video clip has ended, the display device may display the previous view (e.g., a camera selection window).

If selection of a camera does not occur within a predefined time, the window (e.g., a pop-up window) allowing selection of cameras may disappear. The camera selection window may be displayed again by, for example, the user selecting (e.g., by double clicking) an option to open the camera selection window.

In some aspects, the user may open a window that displays additional actions selectable by the user. For example, the display device may display a virtual button and/or may have a physical control (e.g., button, ports, holes, etc.) that, when selected by the user, causes the display device to open a window, such as a pop-up window. The user may select and/or scroll through the alternatives, and a selection of the action may occur when the user, for example, again presses the selectable virtual button and/or physical control. The list of actions displayed in the window may depend on, for example, the application, which may be defined by a developer of the application. In some aspects, the user may be provided with a tool that describes the actions the user can select. In some examples, a user viewing a movie or video on the display may touch a selectable, dedicated element on the display device, causing a pop-up window to be displayed on or next to the movie or video. The pop-up window may display selectable options associated with the movie or video.

Returning to step 904, if the command is for controlling the image capture device (step 904: Y), the method may proceed to step 908. In step 908, the display device may transmit the command to the image capture device. In step 910, the image capture device may receive the command and perform one or more actions based on the command received from the display device. Various examples of commands for the image capture device will now be described.

In some aspects, the user may adjust settings for one or more of the sensors of the image capture device. For example, the user may adjust an aperture size, shutter speed, white balance, ISO, focal length, etc. for a particular camera and/or lens or a plurality of cameras and/or lenses. The user may be able to switch a sensor, such as a microphone or camera, on or off. The user may also be able to adjust sensitivity levels for one or more of the microphones. The user may adjust various other settings for one or more of the sensors of the image capture device.

In some aspects, the user may move the image capture device using the display device, which may be substantially spherical. For example, the user may physically rotate the display device, and the display device may transmit, to the image capture device, the amount and direction of rotation. The image capture device may receive the information and rotate itself the same or similar amount and direction. In some aspects, the display device may comprise a substantially spherical touch screen display, and the user may virtually rotate the display device by, for example, swiping or otherwise moving the user's hands or fingers along the surface of the touch screen display. The amount and direction of the virtual rotation and/or the orientation of the rotation axis may be transmitted to the image capture device, and the image capture device may rotate itself the same or similar amount and direction. The ability to rotate the image capture device may be beneficial for image capture devices having fewer cameras (e.g., two or three cameras), so that one of the cameras may be rotated to face a desired direction.

Optionally, one or more of the controls may be separated from the display device and placed on a dedicated remote control, such as a mouse, a clicker, a mobile phone, a spherical remote control, or any other type of remote control. The remote control may include one or more physical controls (e.g., buttons) and/or one or more touch screens. Selecting a physical button or virtual button on the touchscreen may cause, for example, the display of a menu of actions performable by the user. The menu may be displayed on a display of the remote control and/or on the display device. Selecting a button may cause the display device to display settings, play a video, pause a video, etc. The remote control may include other sensors, such as a gyroscope, accelerometer, and the like, to receive gestures performed by the user. If the remote control is substantially spherical, rotation of the remote control may cause the substantially spherical display and/or the substantially spherical image capture device to rotate the same or similar direction and/or amount.

In some aspects, the remote control may communicate with the image capture device and/or the display device wirelessly or by a wired connection. Optionally, the remote control may communicate with the image capture device via the display device (or vice versa).

In some aspects, the system may include another display device, such as a planar display device (e.g., a flat screen display or a slightly curved screen display), which may be separate from the substantially spherical display device. The other display device may be used to view, for example, enlarged views of chosen portions of the display device.

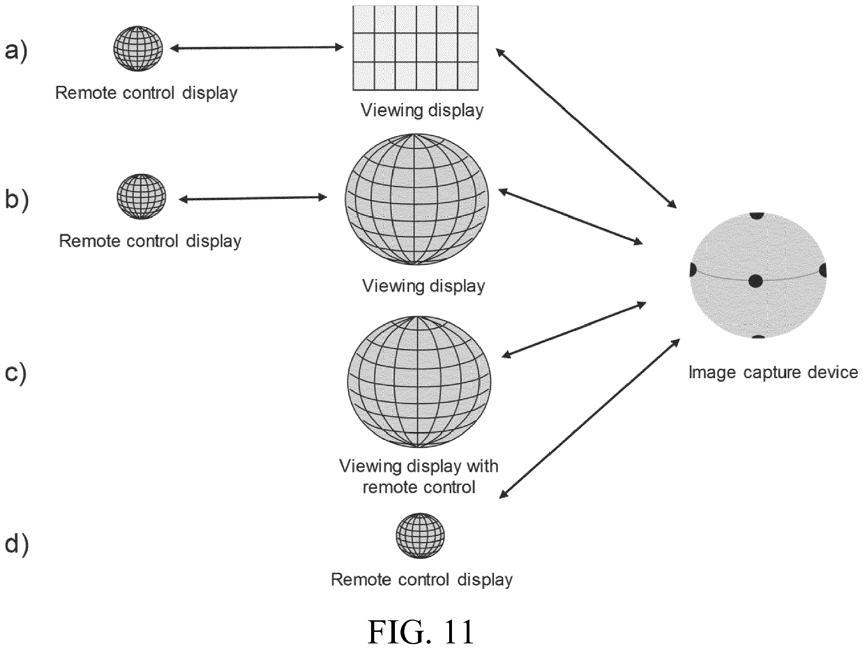

FIG. 11 illustrates examples of various setups of an image capture device, a display device, and/or a remote control according to one or more embodiments described herein. As previously explained, remote control(s) and/or display device(s) may be used with an image capture device in various setups. For example, a remote control may comprise a display for displaying image capture device control information and may comprise means to control the image capture device. A display device (e.g., a viewing display) may display image content from the image capture device. The viewing display may additionally or alternatively display image capture device control information, as previously explained.

In a first example illustrated in FIG. 11 (example a), a remote control (e.g., a spherical remote control display) and a two-dimensional planar viewing display device may be used for control and viewing. In a second example (example b), a remote control (e.g., a spherical remote control display) and a substantially spherical viewing display device may be used for control and viewing. In a third example (example c), a substantially spherical remote control display combined with a viewing display may be used for control and viewing. In a fourth example (example d), a substantially spherical remote control display device may be used for control.

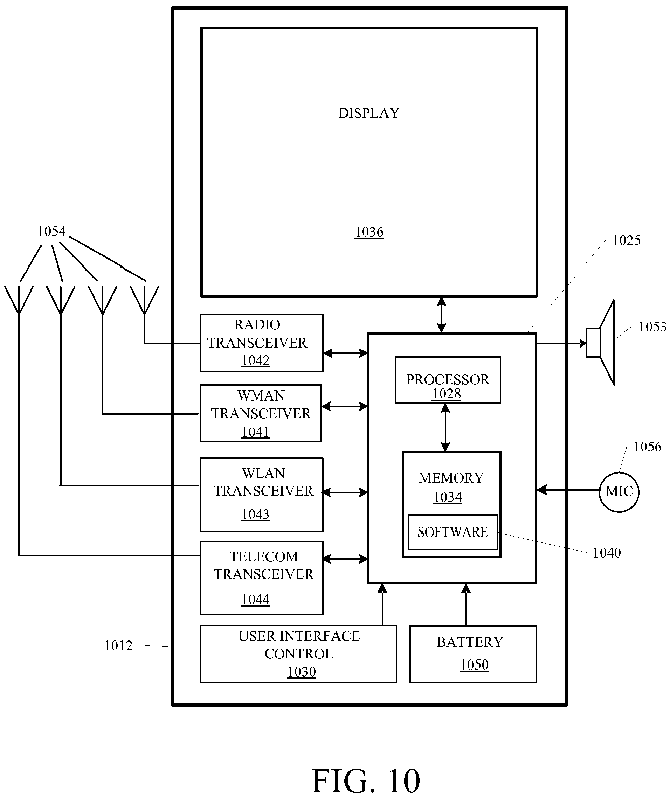

FIG. 10 illustrates an example apparatus, in particular a computing device 1012, that may be used in a communication network, to implement any or all of the image capture devices (e.g., image capture device 100), display devices (e.g., display devices 120, 300, 700, etc.), or remote controls, to perform the steps, data transmissions, data receptions, GUI displays, or image displays illustrated in FIGS. 1-9. Computing device 1012 may include a controller 1025. The controller 1025 may be connected to a user interface control 1030, display 1036, and/or other elements as illustrated. Controller 1025 may include circuitry, such as for example one or more processors 1028 and one or more memory 1034 storing software 1040. The software 1040 may comprise, for example, one or more of the following software options: client software, user interface software, server software, etc.

Device 1012 may also include a battery 1050 or other power supply device, speaker 1053, and one or more antennae 1054. Device 1112 may include user interface circuitry, such as user interface control 1030. User interface control 1130 may include controllers or adapters, and other circuitry, configured to receive input from or provide output to a keypad, touch screen, voice interface - for example via microphone 1056, function keys, joystick, data glove, mouse, and the like. The user interface circuitry and user interface software may be configured to facilitate user control of at least some functions of device 1012 though use of a display 1036. Display 1036 may be configured to display at least a portion of a user interface of device 1012. Additionally, the display may be configured to facilitate user control of at least some functions of the device (for example, display 1036 could be a touch screen). As previously described, the display for a display device described herein (e.g., display devices 120, 300, 700, etc.) may comprise a single display or multiple displays. For example, the one or more displays may comprise or form a substantially hemispherical display, a substantially spherical display (e.g., a spherical display), a 360 degree, omnidirectional, uniform spherical display, etc. In some aspects, the one or more displays may form a polyhedron-type display.

Software 1040 may be stored within memory 1034 to provide instructions to processor 1028 such that when the instructions are executed, processor 1028, device 1012, and/or other components of device 1012 are caused to perform various functions or methods such as those described herein. The software may comprise machine executable instructions and data used by processor 1028 and other components of computing device 1012 may be stored in a storage facility such as memory 1034 and/or in hardware logic in an integrated circuit, ASIC, etc. Software may include both applications and operating system software, and may include code segments, instructions, applets, pre-compiled code, compiled code, computer programs, program modules, engines, program logic, and combinations thereof.

Memory 1034 may include any of various types of tangible machine-readable storage medium, including one or more of the following types of storage devices: read only memory (ROM) modules, random access memory (RAM) modules, magnetic tape, magnetic discs (for example, a fixed hard disk drive or a removable floppy disk), optical disk (for example, a CD-ROM disc, a CD-RW disc, a DVD disc), flash memory, and EEPROM memory. As used herein (including the claims), a tangible or non-transitory machine-readable storage medium is a physical structure that may be touched by a human. A signal would not by itself constitute a tangible or non-transitory machine-readable storage medium, although other embodiments may include signals or ephemeral versions of instructions executable by one or more processors to carry out one or more of the operations described herein.

As used herein, processor 1028 (and any other processor or computer described herein) may include any of various types whether used alone or in combination with executable instructions stored in a memory or other computer-readable storage medium, and should be understood to encompass any of various types of computing structures including but not limited to one or more microprocessors, special-purpose computer chips, field-programmable gate arrays (FPGAs), controllers, application-specific integrated circuits (ASICs), combinations of hardware/firmware/software, or other special or general-purpose processing circuitry.

As used in this application, the term 'circuitry' may refer: (a) to hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a display device or an image capture device, to perform various functions) and (c) to circuits, such as a microprocessor(s) or a portion of a microprocessor(s), that require software or firmware for operation, even if the software or firmware is not physically present.

These examples of 'circuitry' apply to all uses of this term in this application, including in any claims. As an example, as used in this application, the term "circuitry" would also cover an implementation of merely a processor (or multiple processors) or portion of a processor and its (or their) accompanying software and/or firmware. The term "circuitry" would also cover, for example, a baseband integrated circuit or applications processor integrated circuit for a display device, an image capture device, or a similar integrated circuit in a display device, an image capture device, or other device.

Device 1012 or its various components may be mobile and be configured to receive, decode and process various types of transmissions including transmissions in Wi-Fi networks according to a wireless local area network (e.g., the IEEE 802.11 WLAN standards 802.11n, 802.11ac, etc.) and/or wireless metro area network (WMAN) standards (e.g., 802.16), through a specific one or more WLAN transceivers 1043, one or more WMAN transceivers 1041. There exists an 802.11ax task group the purpose of which is to improve spectrum efficiency. One or more embodiments described herein may be applicable to a wireless local area network with improved spectrum efficiency. Additionally or alternatively, device 1012 may be configured to receive, decode and process transmissions through various other transceivers, such as FM/AM Radio transceiver 1042, and telecommunications transceiver 1044 (e.g., cellular network receiver such as CDMA, GSM, etc.).

Although the above description of FIG. 10 generally relates to a mobile device, other devices or systems may include the same or similar components and perform the same or similar functions and methods. For example, a computer communicating over a wired network connection may include the components or a subset of the components described above, and may be configured to perform the same or similar functions as device 1012 and its components. Although specific examples of carrying out the invention have been described, those skilled in the art will appreciate that there are numerous variations and permutations of the above-described systems and methods.

## Claims

1. An apparatus comprising means for performing:
receiving, from an image capture device comprising a plurality of sensors, data associated with the plurality of sensors on the image capture device; and
displaying, on one or more displays on a substantially spherical surface of the apparatus, one or more elements representing the data associated with the plurality of sensors on the image capture device, wherein the one or more elements is displayed at one or more locations on the one or more displays of the apparatus corresponding to locations of the plurality of sensors on the image capture device.

2. The apparatus of claim 1, wherein the means are further configured to perform:
determining, based on the received data, the plurality of locations on the one or more displays of the apparatus corresponding to the locations of the plurality of sensors on the image capture device.

3. The apparatus of claim 1 or 2, wherein:
the plurality of sensors on the image capture device comprise a plurality of cameras on the image capture device,
the data comprises a plurality of images captured by the plurality of cameras on the image capture device, and
displaying the one or more elements comprises displaying the plurality of images captured by the plurality of cameras on the image capture device.

4. The apparatus of claim 3, wherein the means are further configured to perform:
stitching together two or more of the plurality of images to form a substantially continuous image,
wherein the displaying the plurality of images comprises displaying the substantially continuous image.

5. The apparatus of claim 3 or claim 4, wherein:
the data further comprises locations of at least some of the plurality of cameras on the image capture device, and
displaying the one or more elements further comprises displaying a plurality of graphical user interface elements representing the at least some of the plurality of cameras on the image capture device in conjunction with the displaying the plurality of images captured by the plurality of cameras on the image capture device.

6. The apparatus of any one of claims 1 to claim 4, wherein:
the plurality of sensors on the image capture device comprise a plurality of cameras on the image capture device,
the data is indicative of one or more locations of the plurality of cameras on the image capture device,
determining the one or more locations on the one or more displays comprises determining the locations corresponding to the locations of the plurality of cameras on the image capture device, and
displaying the one or more elements comprises displaying a plurality of graphical user interface elements representing the plurality of cameras on the image capture device.

7. The apparatus of any one of claims 4 to claim 6, wherein the substantially continuous image comprises one or more stitching seams that indicate one or more boundaries between the two or more of the plurality of images, and wherein the means are further configured to perform:
moving at least one of the one or more stitching seams prior to displaying the substantially continuous image.

8. The apparatus of any one of claims 5 to claim 7, wherein the means are further configured to perform:
removing, from the one or more displays of the apparatus, display of a plurality of graphical user interface elements representing the plurality of cameras,
wherein the displaying the plurality of images captured by the plurality of cameras is performed after the removing display of the plurality of graphical user interface elements representing the plurality of cameras.

9. The apparatus of any preceding claim, wherein:
the plurality of sensors on the image capture device comprise a plurality of microphones on the image capture device,
the data is indicative of locations of the plurality of microphones on the image capture device, and
determining the one or more locations on the one or more displays comprises determining the locations corresponding to the locations of the plurality of microphones on the image capture device, and
displaying the one or more elements comprises displaying a plurality of graphical user interface elements representing the plurality of microphones on the image capture device.

10. The apparatus of claim 9, wherein the data is indicative of a direction of an audio signal received by one or more microphones on the image capture device, and wherein the means are further configured to perform:
determining, based on the received data, a location on the one or more displays of the apparatus and corresponding to the direction of the audio signal received by the one or more microphones on the image capture device; and
displaying, on the one or more displays of the apparatus and at the location corresponding to the direction of the audio signal, a graphical user interface element representing the audio signal.

11. The apparatus of any preceding claim, wherein the one or more displays of the apparatus comprises one or more touchscreen displays, and wherein the means are further configured to perform:
receiving, via the one or more touchscreen displays, user input for the image capture device; and
transmitting, by the apparatus and to the image capture device, the user input for the image capture device.

12. The apparatus of claim 11, wherein the user input comprises a command to rotate the image capture device.

13. The apparatus of any preceding claim, wherein the means comprises:
at least one processor; and
at least one memory including computer program code, the at least one memory and computer program code configured to, with the at least one processor, cause the performance of the apparatus.

14. A method comprising:
receiving, by a display device and from an image capture device comprising a plurality of sensors, data associated with the plurality of sensors on the image capture device; and
displaying, on the one or more displays on a substantially spherical surface of the display device, one or more elements representing the data associated with the plurality of sensors on the image capture device, wherein the one or more elements is displayed at one or more locations on the one or more displays of the display device corresponding to locations of the plurality of sensors on the image capture device.

15. A computer-readable medium storing computer-readable instructions that, when executed by a computing device, cause the computing device to:
receive, from an image capture device comprising a plurality of sensors, data associated with the plurality of sensors on the image capture device; and
display, on the one or more displays on a substantially spherical surface of the computing device, one or more elements representing the data associated with the plurality of sensors on the image capture device, wherein the one or more elements is displayed at one or more locations on the one or more displays of the computing device corresponding to locations of the plurality of sensors on the image capture device.
